# EUROPÄISCHE PATENTANMELDUNG

(11) **EP 2 698 624 A1**
(43) Veröffentlichungstag der Anmeldung: **19.02.2014**
(21) Anmeldenummer: 12180621.0
(22) Anmeldetag: 16.08.2012
(51) Int. Cl.: G01N 21/03, B01L 3/14

(54) **Reaktionsgefäß**

(71) Anmelder: Siemens Healthcare Diagnostics Products GmbH, 35041 Marburg (DE)
(72) Erfinder: Meller, Paul, 61273 Wehrheim (DE)

(57) **Zusammenfassung**

Ein Reaktionsgefäß (1) mit einer Umwandung (4) und einer Öffnung (6) zur Aufnahme von zu analysierenden Flüssigkeiten ermöglicht eine besonders flexible automatische Prozessierung und gleichzeitig hohe Qualität der Messergebnisse. Dazu umfasst die Umwandung (4) einen ersten Abschnitt (10), in dem zumindest die äußere Oberfläche im Wesentlichen kreissymmetrisch ausgebildet ist, und einen zweiten Abschnitt (12), der mindestens zwei ebene Flächen (14) aufweist, die ein lichtdurchlässiges Material umfassen, einander gegenüber liegen und parallel angeordnet sind, und wobei das Reaktionsgefäß (1) ein Mittel (12, 22, 26) zur Orientierung des Reaktionsgefäßes (1) in einer Aufnahmeposition aufweist.

## Beschreibung

Die Erfindung betrifft ein Reaktionsgefäß mit einer Umwandung und einer Öffnung zur Aufnahme von zu analysierenden Flüssigkeiten. Sie betrifft weiter ein Gerät zur automatischen Analyse von Proben umfassend eine Vorrichtung zum räumlichen Transfer eines Reaktionsgefäßes, eine Aufnahmeposition zur Aufnahme eines Reaktionsgefäßes und ein optisches Analysesystem.

Zahlreiche Nachweis- und Analyseverfahren zur Bestimmung physiologischer Parameter in Körperflüssigkeitsproben oder biologischen Proben werden heute automatisiert in großer Anzahl in entsprechenden Geräten durchgeführt. Hierfür werden für Proben, Reagenzien und auch für die eigentliche Nachweisreaktion geeignete, auch als Küvetten bezeichnete Gefäße verwendet. Diese umfassen üblicherweise eine geschlossene Umwandung sowie eine gegebenenfalls verschließbare Öffnung zur Aufnahme der jeweils zu analysierenden Flüssigkeit.

Heutige Geräte sind in der Lage, eine Vielzahl von Nachweisreaktionen und Analysen mit einer Probe durchzuführen. Hierzu umfassen derartige Geräte üblicherweise eine Aufnahmeposition für ein Reaktionsgefäß sowie ein der Aufnahmeposition zugeordnetes Analysesystem. Für komplexe, nacheinander mehrere Prozessschritte umfassende Reaktionsverläufe wird das Probengefäß in der Regel mehrfach zu verschiedenen Zugabe- und/oder Reaktionsstationen transportiert. Um eine Vielzahl von Untersuchungen automatisiert durchführen zu können, sind zudem häufig mehrere Vorrichtungen zum räumlichen Transfer der Gefäße erforderlich, wie z.B. Transferarme, Transportbänder und drehbare Transporträder.

Gerade für mehrachsige Transferarme ist es dabei häufig erforderlich, dass die Küvetten keine Anforderungen an die Orientierung oder Ausrichtung des Transferarms stellen. Typischerweise sollten die Gefäße daher rotationssymmetrisch ausgebildet sein, so dass der Transferarm das Gefäß aus beliebiger Richtung erfassen kann. Diese Forderung korreliert weitgehend mit den Bedingungen an ein flexibles, wahlfreies und in der Reihenfolge der Bearbeitung unabhängiges System.

Viele der in derartigen, automatisiert arbeitenden Analysegeräten verwendeten Analysesysteme beruhen auf photometrischen und/oder radiometrischen Messprinzipien. Diese Verfahren ermöglichen den qualitativen und quantitativen Nachweis von Analyten in flüssigen Proben, ohne zusätzliche Trennschritte vorsehen zu müssen.

Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt. Die Photometrie untersucht und nutzt die Schwächung eines Lichtstroms beim Durchtritt durch ein absorbierendes und/oder streuendes Medium. Je nach Art der ausgelösten biochemischen oder biophysikalischen Reaktion kommen unterschiedliche photometrische/radiometrische Messverfahren zum Einsatz, die die Messung eines trüben flüssigen Testansatzes ermöglichen.

Hierzu können auch turbidimetrische Verfahren eingesetzt werden, bei denen die Trübung beziehungsweise die optische Dichte einer Lösung oder Dispersion (Suspension) anhand der Lichtschwächung oder Extinktion eines direkt durch die Dispersion (Suspension) hindurch tretenden Lichtstrahls gemessen wird.

Hierbei erweist sich die zuvor beschriebene Forderung der Rotationssymmetrie an Reaktionsgefäße, die für die Automatisierung geeignet sein sollen, als nachteilig. Die durch die Rotationssymmetrie bedingten sphärisch geformten Oberflächen wirken bei optischen Strahlengängen als zusätzliche Linsen, deren abbildende Eigenschaften wie z.B. bei Absorptions-, Diffraktions-, Streuungs- und/oder Reflexionseffekte zu deutlichen Änderungen im Ergebnis einer Messung führen können.

Bei aktuell verwendeten Systemen mit Einzelküvetten werden die oben genannten Nachteile beim Einsatz geometrisch isotroper Küvetten in Kauf genommen. Solange ausschließlich Signaldifferenzmessungen an derselben Küvette durchgeführt werden, kann der Einfluss des Materials und seiner individuellen Fehleranteile zumindest weitgehend kompensiert werden. Im Falle von Absolutmessungen jedoch tragen die Einflüsse des jeweils eingesetzten Reaktionsgefäßes erheblich zum Messsignal bei.

Diese allein durch die Geometrie des Reaktionsgefäßes bedingten Einflüsse führen immer wieder zu Missverständnissen, Schwierigkeiten bei der Be- und Auswertung bis hin zu fehlerhaften Betrachtungen von Messergebnissen.

Es ist daher Aufgabe der Erfindung, ein Reaktionsgefäß sowie ein Gerät zur automatischen Analyse von Proben anzugeben, die eine besonders flexible automatische Prozessierung und unter Ausschaltung der Küvetteneigenschaften gleichzeitig hohe Qualität der Messergebnisse ermöglichen.

Bezüglich des Reaktionsgefäßes wird die Aufgabe erfindungsgemäß gelöst, indem die Umwandung einen ersten Abschnitt, in dem zumindest die äußere Oberfläche im Wesentlichen kreissymmetrisch ausgebildet ist, und einen zweiten Abschnitt, der mindestens zwei ebene Flächen aufweist, die ein lichtdurchlässiges Material umfassen, einander gegenüber liegen und parallel angeordnet sind, umfasst, und wobei das Reaktionsgefäß ein Mittel zur Orientierung des Reaktionsgefäßes in einer Aufnahmeposition aufweist.

Die Erfindung geht dabei von der Überlegung aus, dass für die gewünschte Nichtbeeinflussung des optischen Strahlengangs eine Querschnittswandung mit einer entsprechenden Symmetrie mit gegenüberliegenden planen Umwandungsteilen erforderlich ist. Um eine Küvette mit derartiger Symmetrie und gleichzeitiger Kreis- und Radiärsymmetrie herzustellen, sollten verschiedene Bereiche des Reaktionsgefäßes ausgebildet werden, nämlich ein Bereich für die Prozessierung der Transfersysteme, der kreissymmetrisch gehalten ist, und ein Bereich für den Einsatz im optischen System mit entsprechender mehrzähliger Symmetrie. Da nunmehr aber das Transfersystem bestimmungsgemäß durch die Rotationssymmetrie keine Orientierung des Gefäßes mehr vorgibt, diese jedoch für ein senkrechtes (= normales) Auftreffen des Lichtstrahles für die optische Analyse erforderlich ist, sollte in der Aufnahmeposition eine Orientierung des Gefäßes ermöglicht werden. Dazu weist das Reaktionsgefäß entsprechende Mittel zur Orientierung des Reaktionsgefäßes in der Aufnahmeposition auf.

In vorteilhafter Ausgestaltung umfasst das Mittel zur Orientierung des Reaktionsgefäßes in einer Aufnahmeposition eine Vertiefung im Boden des Reaktionsgefäßes, die zur Aufnahme eines passenden, drehbaren Stiftes, der in der Aufnahmeposition angebracht ist, vorgesehen ist. Hierdurch kann ein dazu entsprechender drehbarer Stift in der Aufnahmeposition in der Art eines Stempels beim Einsetzen von der Vertiefung formschlüssig aufgenommen werden. Die Vertiefung im Boden des Reaktionsgefäßes bzw. der komplementäre Stift, der in der Aufnahmeposition angebracht ist, können jede Form aufweisen, die es ermöglicht, dass das Reaktionsgefäß durch den Formschluss von Stift und Vertiefung in der Aufnahmeposition eine definierte Ausrichtung erfährt. Beispielsweise kann der drehbare Stift einen quadratischen, einen rechteckigen, einen dreickigen, einen vieleckigen, einen ovalen, einen rautenförmigen, einen sternförmigen oder einen pfeilförmigen Querschnitt aufweisen. Durch automatisiertes aktives Drehen des Stiftes kann, sofern dies erforderlich ist, das Reaktionsgefäß dann in die korrekte Position für die optische Analyse gebracht werden, wobei das Reaktionsgefäß so ausgerichtet wird, dass zwei ebene Flächen des zweiten Abschnitts des Reaktionsgefäßes, die ein lichtdurchlässiges Material umfassen, einander gegenüber liegen und parallel angeordnet sind, senkrecht zum Strahlengang ausgerichtet werden.

Alternativ oder zusätzlich können auch passive Positionierungssysteme zur Anwendung kommen. Dabei umfasst das Mittel zur Orientierung des Reaktionsgefäßes in einer Aufnahmeposition vorteilhafterweise spiralförmig verlaufende Führungsrillen, welche zur Aufnahme von Führungsstegen, die in der Aufnahmeposition angebracht sind, vorgesehen sind.

In weiterer alternativer oder zusätzlicher vorteilhafter Ausgestaltung umfasst das Mittel zur Orientierung des Reaktionsgefäßes in einer Aufnahmeposition spiralförmig verlaufende Führungsstege, welche zum Eingreifen in Führungsrillen, die in der Aufnahmeposition angebracht sind, vorgesehen sind. Derartige Führungsrillen oder Führungsstege sind dabei so angeordnet, dass sie beim Einsetzen in die Führungsposition die Küvette automatisch durch Zwangsführung in die gewünschte Orientierung drehen.

Vorteilhafterweise weist der zweite, für den optischen Strahlengang der Analysevorrichtung vorgesehene Abschnitt vier ebene Flächen auf, von denen je zwei einander gegenüber und parallel angeordnet sind. Zusätzlich weist der zweite Abschnitt vorteilhafterweise einen viereckigen, insbesondere quadratischen Querschnitt auf. Für eine derartige Ausgestaltung ist aus einer beliebigen Position nur eine Drehung um maximal 45 Grad notwendig, um die Küvette in eine senkrechte Ausrichtung der Oberflächen zum Strahlengang zu bringen. Dies vereinfacht die Ausrichtung, so dass bei einer horizontalen Führung in die gewünschte Position und ausreichender Halterung der Küvette passive Positionierungssysteme ausreichend sind.

In weiterer vorteilhafter Ausgestaltung weist der zweite Abschnitt n geradzahlige mit n >= 4 ebene Flächen auf, d.h. z.B. sechs, acht, zehn oder zwölf, von denen je zwei einander gegenüber und parallel angeordnet sind. Dadurch reduziert sich die erforderliche Drehung weiter, allerdings reduziert sich auch die Breite der für den Strahlengang geeigneten Oberfläche.

In vorteilhafter Ausgestaltung überragt der die Öffnung des Reaktionsgefäßes umlaufende Rand die äußere Oberfläche des ersten Abschnitts des Reaktionsgefäßes. Hierdurch wird eine Kante geschaffen, die in jeglicher Orientierung einen sicheren Halt für ein Transfersystem wie beispielsweise einen Transferarm bietet.

In weiterer vorteilhafter Ausgestaltung besteht das gesamte Reaktionsgefäß aus lichtdurchlässigem Material. Da lichtdurchlässiges Material für den Strahlengang im zweiten Abschnitt ohnehin erforderlich ist, ermöglicht diese Maßnahme eine einstückige und damit besonders günstige und technisch einfache Fertigung des gesamten Reaktionsgefäßes, beispielsweise im Spritzgussverfahren.

Bezüglich des Geräts zur automatischen Analyse von Proben wird die Aufgabe gelöst, indem die mindestens eine Position zur Aufnahme eines Reaktionsgefäßes mindestens ein Mittel zur Orientierung eines beschriebenen Reaktionsgefäßes aufweist, welches ausgebildet ist, das Reaktionsgefäß so auszurichten, dass ein Strahlengang des optischen Analysesystems senkrecht auf zwei ebenen Flächen, die einander gegenüber liegen und parallel angeordnet sind, auftrifft.

Vorteilhafterweise umfasst das Mittel zur Orientierung des Reaktionsgefäßes einen asymmetrisch geformten, drehbaren Stift, der zum Eingreifen in eine passende Vertiefung im Boden des Reaktionsgefäßes vorgesehen ist.

In alternativer oder zusätzlicher vorteilhafter Ausgestaltung umfasst das Mittel zur Orientierung des Reaktionsgefäßes spiralförmig verlaufende Führungsstege, die zum Eingreifen in spiralförmig verlaufende Führungsrillen, die am Reaktionsgefäß vorhanden sind, vorgesehen sind.

In weiterer alternativer oder zusätzlicher Ausgestaltung umfasst das Mittel zur Orientierung des Reaktionsgefäßes spiralförmig verlaufende Führungsrillen, die zur Aufnahme von spiralförmig verlaufenden Führungsstegen, die im ersten Abschnitt des Reaktionsgefäßes vorhanden sind, vorgesehen sind.

Das Mittel zur Orientierung des Reaktionsgefäßes umfasst vorteilhafterweise einen mittels eines Federelements beweglich gelagerten Stift. Hierdurch wird ein Ausrichten des Reaktionsgefäßes im zweiten Abschnitt ermöglicht: Bei einem viereckigen Querschnitt übt mit entsprechender Ausrichtung des Stiftes zum Angriff im Bereich der Ecken des Vierecks die Federkraft Druck auf das Reaktionsgefäß aus, bis es die korrekte Position einnimmt.

Vorteilhafterweise umfasst die Vorrichtung zum Transfer eines Reaktionsgefäßes einen mechanischen Greifer. Gerade bei derartigen Greifern, die Küvetten in jedweder Orientierung erfassen können müssen, ist eine kreissymmetrische Ausgestaltung im ersten Bereich besonders vorteilhaft.

Die mit der Erfindung erzielten Vorteile bestehen insbesondere darin, dass durch die Kombination eines ersten und eines zweiten Bereichs mit unterschiedlichen Symmetrien am Reaktionsgefäß in Verbindung mit Mitteln zur Ausrichtung ein sowohl für die automatische Prozessierung als auch die störungsfreie optische Messung optimiertes Reaktionsgefäß geschaffen wird. Die Anforderungen erzwingen teilweise unterschiedliche Geometriebedingungen, was durch die vorliegende Beschreibung vereinbart werden kann. Durch eine angepasste Werkzeugherstellung und Kunststoffabformung (Kunststoffspritzgussverfahren) können die geforderten geometrischen Bedingungen in Standardverfahren der Herstellung erreicht werden.

Die Erfindung wird anhand einer Zeichnung näher erläutert. Darin zeigen:
- FIG 1: ein Reaktionsgefäß in Aufsicht,
- FIG 2: ein Reaktionsgefäß und einen Teil einer Aufnahmeposition in Aufsicht, und
- FIG 3: ein Reaktionsgefäß und einen Teil einer Aufnahmeposition im horizontalen Schnitt.

Gleiche Teile sind in allen Figuren mit denselben Bezugszeichen versehen.

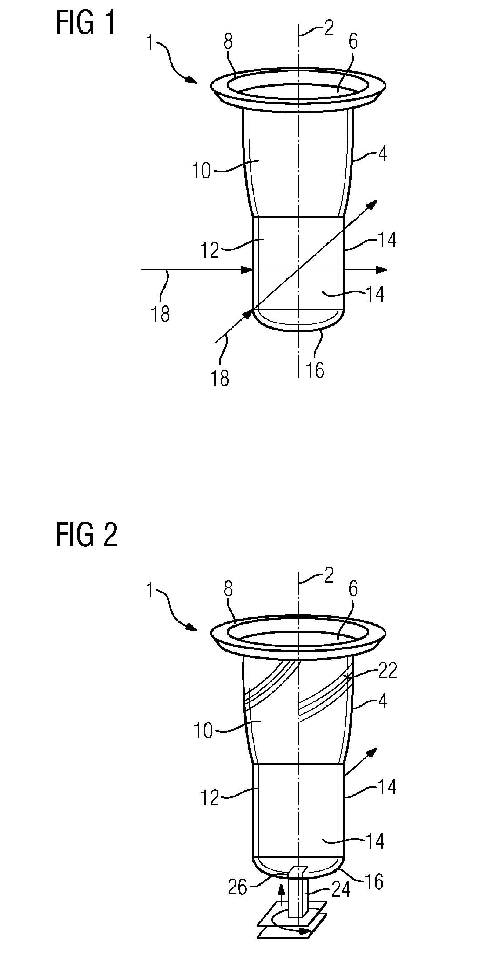

FIG 1 zeigt ein Reaktionsgefäß 1 in der Aufsicht. Das Reaktionsgefäß 1 ist im Wesentlichen stabförmig aufgebaut und weist verschiedene Symmetrien bezüglich einer vertikalen Achse 2 auf. Das Reaktionsgefäß 1 ist hohl und ist somit zur Aufnahme von Flüssigkeitsproben und Reagenzien geeignet. Die Umwandung 4 des Reaktionsgefäßes 1 weist eine Öffnung 6 auf, durch die die Flüssigkeitsproben und Reagenzien eingefüllt werden können.

In axialer Richtung weist das Reaktionsgefäß 1 mehrere Abschnitte mit unterschiedlichen Symmetrien auf. Von der Öffnung 6 ausgehend, die einen kreisförmigen Rand 8 aufweist, schließt sich zunächst ein kreissymmetrischer erster Abschnitt 10 an. Dessen Querschnitt verläuft entlang der Achse 2 zunächst zylinderförmig und verjüngt sich dann. Der erste Abschnitt ist aufgrund seiner Kreissymmetrie geeignet, durch beliebige, nicht näher dargestellte Transportsysteme wie z.B. einen Transferarm in beliebiger Orientierung erfasst zu werden. Zum sicheren Halt des Transportarms bzw. der Greifergeometrie ist der Rand 8 so ausgestaltet, dass sein äußerster Umfang einen größeren Durchmesser hat als der sich daran anschließende erste Abschnitt 10. Dadurch bildet der Rand 8 einen überspringenden Wulst, der mit dem ersten Abschnitt 10 eine in jeder Richtung fassbare, umlaufende Eingriffsmulde bildet.

An den ersten Abschnitt 10 schließt sich in axialer Richtung ein zweiter Abschnitt 12 an, der im vorliegenden Ausführungsbeispiel eine vierzählige Radiärsymmetrie aufweist, d.h. nach jeweils einer viertel Umdrehung um die Achse 2 wird der zweite Abschnitt 12 auf sich selbst abgebildet. Die Umwandung 4 weist im zweiten Abschnitt vier paarweise symmetrische ebene Flächen 14 auf, die in Achsenrichtung ausgerichtet sind und im horizontalen Querschnitt ein Quadrat bilden. An den zweiten Abschnitt 12 schließt sich in axialer Richtung schließlich der Boden 16 an, der in der Art einer Kappe den unteren Abschluss des Reaktionsgefäßes 1 bildet. Der Boden 16 ist bezüglich der Achse 2 rotationssymmetrisch ausgestaltet.

Das gesamte Reaktionsgefäß 1 ist - mindestens in Abschnitt 12 - aus einem lichtdurchlässigen Kunststoff im Spritzgussverfahren gefertigt. Durch die ebenen Flächen 14 ist damit eine störungsarme optische Analyse der in dem Reaktionsgefäß 1 enthaltenen Flüssigkeit möglich. Optimal ist dabei ein Strahlengang 18 senkrecht zur Oberfläche der Flächen 14, wie in FIG 1 dargestellt. Somit wird der Strahlengang 18 nicht durch Lichtbrechung beeinflusst.

Damit das Reaktionsgefäß 1 beim Einsetzen in eine in FIG 1 nicht näher dargestellte Aufnahmeposition die korrekte Ausrichtung zu den Strahlengängen 18 des typischerweise fest angeordneten optischen Analysesystems hat, weist es Mittel zur Orientierung auf, die in FIG 2 dargestellt sind, die nur anhand ihrer Unterschiede zu FIG 1 erläutert wird.

Die Mittel zur Orientierung sind im Ausführungsbeispiel nach der FIG 2 als im Wesentlichen spiralförmig im ersten Abschnitt 10 angeordnete Führungsrillen 22 ausgebildet. Die Führungsrillen 22 greifen in entsprechende, nicht dargestellte Führungsstege in der Aufnahmeposition ein. Sie sind so ausgebildet, dass eine automatische, mechanisch veranlasste Drehung in die korrekte Orientierung in der Aufnahmeposition beim Absenken erfolgt.

Alternativ können anstatt der Führungsrillen 22 Führungsstege angeordnet werden, die in nicht näher dargestellte Führungsrillen in der Aufnahmeposition eingreifen. Weiterhin ist als Teil der Aufnahmeposition ein um die Achse 2 beispielsweise durch einen Elektromotor drehbarer Stift 24 angeordnet, der eine Vorzugsorientierung aufweist. Dieser greift in eine im Boden 16 eingebrachte Vertiefung ein. Durch die formschlüssige Verbindung ist das Reaktionsgefäß 1 somit durch Drehung des Stiftes 24 beliebig und insbesondere in die gewünschte Orientierung drehbar.

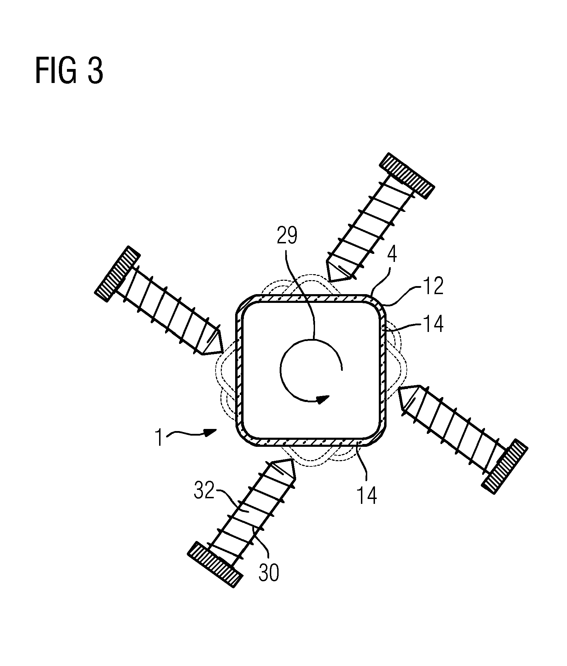

Eine weitere alternative Ausführungsform zeigt FIG 3. Hier ist das Reaktionsgefäß 1 in Blickrichtung der Achse 2 in einem horizontalen Schnitt durch den zweiten Abschnitt 12 dargestellt. Durch einen Pfeil 29 ist die Drehung des Reaktionsgefäßes 1 angedeutet, wobei schematisch überlagert mehrere Drehpositionen bei 0 Grad, 22,5 Grad und 45 Grad angedeutet sind.

Am Reaktionsgefäß 1 selbst ist das Mittel zur Orientierung durch den zweiten Abschnitt 12 selbst gebildet, der einen Querschnitt aufweist, der einem abgerundeten Quadrat entspricht. Die Aufnahmeposition weist vier horizontal angeordnete, mittels je eines Federelements 30 beweglich gelagerte Stifte 32 auf. Diese sind in einer vierzähligen Radiärsymmetrie bezüglich der Achse 2 so angeordnet, dass die Ausrichtung des Federelements an der Achse 2 vorbei weist. Sie sind weiterhin so angeordnet, dass die Federelemente 30 bei der gewünschten Position des Reaktionsgefäßes 1 maximal ausgedehnt sind, so dass nur Druck ausgeübt wird, wenn das Reaktionsgefäß 1 gegenüber der gewünschten Position verdreht ist. Somit wird das Reaktionsgefäß 1 durch den Druck der Federelemente 30 automatisch in die gewünschte Position gedreht.

Der Stift 24 sowie die Stifte 32 sind jeweils Bestandteile der nicht weiter dargestellten Aufnahmeposition eines Gerätes zur Analyse der Flüssigkeit im Reaktionsgefäß 1. Das Gerät umfasst weiterhin das optische Analysesystem sowie einen Transferarm zum Ergreifen und Einsetzen des Reaktionsgefäßes 1 in die Aufnahmeposition.

In einer alternativen, nicht dargestellten Ausgestaltung kann der zweite Abschnitt 12 auch eine höhere, geradzahlige Symmetrie aufweisen, z.B. sechsfach, achtfach oder zwölffach. Die Symmetrie sollte geradzahlig sein, so dass zwei planparallele Flächen 14 entstehen.

### BEZUGSZEICHENLISTE

- 1: Reaktionsgefäß
- 2: Achse
- 4: Umwandung
- 6: Öffnung
- 8: Rand
- 10: erster Abschnitt
- 12: zweiter Abschnitt
- 14: ebene Fläche
- 16: Boden
- 18: Strahlengang
- 22: Führungsrille
- 24: Stift
- 26: Vertiefung
- 29: Pfeil
- 30: Federelement
- 32: Stift

## Patentansprüche

1. Reaktionsgefäß (1) mit einer Umwandung (4) und einer Öffnung (6) zur Aufnahme von zu analysierenden Flüssigkeiten, wobei die Umwandung (4)
einen ersten Abschnitt (10), in dem zumindest die äußere Oberfläche im Wesentlichen kreissymmetrisch ausgebildet ist, und
einen zweiten Abschnitt (12), der mindestens zwei ebene Flächen (14) aufweist, die ein lichtdurchlässiges Material umfassen, einander gegenüber liegen und parallel angeordnet sind, umfasst,
und wobei das Reaktionsgefäß (1) ein Mittel (12, 22, 26) zur Orientierung des Reaktionsgefäßes (1) in einer Aufnahmeposition aufweist.

2. Reaktionsgefäß (1) nach Anspruch 1, wobei das Mittel (12, 22, 26) zur Orientierung des Reaktionsgefäßes (1) in einer Aufnahmeposition eine Vertiefung (26) im Boden (16) des Reaktionsgefäßes (1) umfasst, die zur Aufnahme eines passenden, drehbaren Stiftes (24), der in der Aufnahmeposition angebracht ist, vorgesehen ist.

3. Reaktionsgefäß (1) nach einem der vorhergehenden Ansprüche, wobei das Mittel (12, 22, 26) zur Orientierung des Reaktionsgefäßes (1) in einer Aufnahmeposition spiralförmig verlaufende Führungsrillen (22) umfasst, welche zur Aufnahme von Führungsstegen, die in der Aufnahmeposition angebracht sind, vorgesehen sind.

4. Reaktionsgefäß (1) nach einem der vorhergehenden Ansprüche, wobei das Mittel (12, 22, 32) zur Orientierung des Reaktionsgefäßes (1) in einer Aufnahmeposition spiralförmig verlaufende Führungsstege umfasst, welche zum Eingreifen in Führungsrillen, die in der Aufnahmeposition angebracht sind, vorgesehen sind.

5. Reaktionsgefäß (1) nach einem der vorhergehenden Ansprüche, wobei der zweite Abschnitt (12) vier ebene Flächen (14) aufweist, von denen je zwei einander gegenüber und parallel angeordnet sind.

6. Reaktionsgefäß (1) nach Anspruch 5, wobei der zweite Abschnitt (12) einen viereckigen, insbesondere quadratischen Querschnitt aufweist.

7. Reaktionsgefäß (1) nach einem der vorhergehenden Ansprüche, wobei der zweite Abschnitt (12) n geradzahlige mit n >= 4 ebene Flächen (14) aufweist, von denen je zwei einander gegenüber und parallel angeordnet sind.

8. Reaktionsgefäß (1) nach einem der vorhergehenden Ansprüche, wobei der die Öffnung (6) des Reaktionsgefäßes (1) umlaufende Rand (8) die äußere Oberfläche des ersten Abschnitts (10) des Reaktionsgefäßes (1) überragt.

9. Reaktionsgefäß (1) nach einem der vorhergehenden Ansprüche, wobei das gesamte Reaktionsgefäß (1) aus lichtdurchlässigem Material besteht.

10. Gerät zur automatischen Analyse von Proben umfassend eine Vorrichtung zum räumlichen Transfer eines Reaktionsgefäßes (1), eine Aufnahmeposition zur Aufnahme eines Reaktionsgefäßes (1) und ein optisches Analysesystem, wobei die mindestens eine Position zur Aufnahme eines Reaktionsgefäßes (1) mindestens ein Mittel zur Orientierung eines Reaktionsgefäßes (1) gemäß einem der Ansprüche 1 bis 9 aufweist, welche ausgebildet sind, das Reaktionsgefäß (1) so auszurichten, dass ein Strahlengang (18) des optischen Analysesystems senkrecht auf zwei ebenen Flächen (14), die einander gegenüber liegen und parallel angeordnet sind, auftrifft.

11. Gerät nach Anspruch 10, wobei das Mittel (24) zur Orientierung des Reaktionsgefäßes (1) einen asymmetrisch geformten, drehbaren Stift (24) umfasst, der zum Eingreifen in eine passende Vertiefung (26) im Boden des Reaktionsgefäßes vorgesehen ist.

12. Gerät nach Anspruch 10 oder 11, wobei das Mittel zur Orientierung des Reaktionsgefäßes (1) spiralförmig verlaufende Führungsstege umfasst, die zum Eingreifen in spiralförmig verlaufende Führungsrillen (22), die am Reaktionsgefäß (1) vorhanden sind, vorgesehen sind.

13. Gerät nach einem der Ansprüche 10 bis 12, wobei das Mittel zur Orientierung des Reaktionsgefäßes (1) spiralförmig verlaufende Führungsrillen umfasst, die zur Aufnahme von spiralförmig verlaufenden Führungsstegen, die im ersten Abschnitt des Reaktionsgefäßes (1) vorhanden sind, vorgesehen sind.

14. Gerät nach einem der Ansprüche 10 bis 13, wobei das Mittel zur Orientierung des Reaktionsgefäßes (1) einen mittels eines Federelements (30) beweglich gelagerten Stift (32) umfasst.

15. Gerät nach einem der Ansprüche 10 bis 14, wobei die Vorrichtung zum Transfer eines Reaktionsgefäßes (1) einen mechanischen Greifer umfasst.
